# EUROPÄISCHE PATENTANMELDUNG

(11) **EP 2 159 319 A1**
(43) Veröffentlichungstag der Anmeldung: **03.03.2010**
(21) Anmeldenummer: 08162903.2
(22) Anmeldetag: 25.08.2008
(51) Int. Cl.: D06M 13/513, C09D 183/06

(54) **Verfahren zum Behandeln von Textilen Substraten**

(71) Anmelder: BASF SE, 67056 Ludwigshafen (DE)
(72) Erfinder: Wagner, Norbert, 67112 Mutterstadt (DE); Traut, Alexander, 68169 Mannheim (DE); Kujat, Christof, 67434 Neustadt (DE); Sobotka, Bettina, 68167 Mannheim (DE); Schmitt, Michael, 67549 Worms (DE); Nörenberg, Ralf, 67063 Ludwigshafen (DE); Raffaele Addamo, Antonino, 67063 Ludwigshafen (DE); Höing, Maik, 48712 Gescher (DE); Schröter, Frank, 47445 Moers (DE); Textor, Torsten, 47807 Krefeld (DE); Schollmeyer, Eckhard, 24214 Gettorf (DE)

(57) **Zusammenfassung**

Verfahren zur Behandlung von textilen Substraten, das dadurch gekennzeichnet ist, dass man mit einer wässrigen Formulierung behandelt, enthaltend
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten,

und die zumindest 50 Gew.-% Wasser enthält,
und wobei die wässrige Formulierung frei ist von organischen Fluorverbindungen.

## Beschreibung

Die vorliegende Erfindung betrifft ein Verfahren zur Behandlung von textilen Substraten, das dadurch gekennzeichnet ist, dass man mit einer wässrigen Formulierung behandelt, enthaltend
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten,
und die zumindest 50 Gew.-% Wasser enthält,
und wobei die wässrige Formulierung frei ist von organischen Fluorverbindungen.

Weiterhin betrifft die vorliegende Erfindung textile Substrate, behandelt nach dem erfindungsgemäßen Verfahren, und Formulierungen, die zur Durchführung des erfindungsgemäßen Verfahrens besonders geeignet sind.

An textile Substrate werden heutzutage in vielen Anwendungen hohe Anforderungen gestellt. Insbesondere so genannte technische Textilien sollen im Gegensatz zu zahlreichen Textilanwendungen im Bekleidungssektor hohen Maßstäben genügen, was mechanische Strapazierfähigkeit betrifft. Beispiele für derartige technische Textilien finden sich beispielsweise als oder als Bestandteil von Sitzen in Fahrzeugen, beispielsweise Autositzen, als Schutz gegen Witterung oder Sonneneinstrahlung, beispielsweise als oder zur Herstellung von Sonnensegeln, Dachersatz, Markisen, Sonnenschirmen oder Abdeckplanen, als Segel, insbesondere für Schiffe, und als oder als Bestandteil von Förderbändern sowie für textiles Bauen.

In DE 199 17 366 wird vorgeschlagen, Textilien mit einer Mischung von hydrolysierbaren Silanen, wie beispielsweise Tetraethoxysilan und Methyltriethoxysilan und einem Kieselsäuresol sowie einem pyrogenen Kieselgel zu beschichten und dadurch Schmutz abweisend zu machen. Die Schmutz abweisende Wirkung wird vielfach der Mikrostrukturierung der Oberfläche zugeschrieben. DE 199 17 366 und DE 199 367 beschreiben weiterhin Methoden zur Ausrüstung von verschiedensten Substraten, insbesondere Glasplatten, unter Verwendung von Hydrolysaten von Siliziumverbindungen, insbesondere von Silanen wie beispielsweise Tetraethoxysilan ("TEOS") in Gegenwart von fluorierten Silanen und Kieselsäuresol in alkoholischer Lösung. Die beschriebene Schleuderbeschichtung ist jedoch für textile Substrate nicht optimal.

Nachteilig ist jedoch an dieser Methode, dass in vielen Fällen die Haftung der Beschichtung an Textil nicht ausreichend ist. Insbesondere von mechanisch stark beanspruchten technischen Textilien blättert die Beschichtung ab.

In US 3,987,997 wird vorgeschlagen, eine saure Dispersion von kolloidalem Kieselgel und hydroxylgruppenhaltigem Silsesquioxan in einem wässrig-alkoholischen Medium zu verwenden, um abrasionsstabile Linsen oder andere Flächengebilde herzustellen, die sich beispielsweise als Fensterscheiben eignen.

Derartige aus dem Stand der Technik bekannte Beschichtungsmethoden sind jedoch für technische Textilien nicht geeignet. Die entsprechenden beschichteten Substrate sind hydrophil und ständig feucht und halten Staub fest. Sie müssen daher ständig sauber gehalten werden. Eine derartige Eigenschaft ist insbesondere für technische Textilien jedoch nicht hinnehmbar. Insbesondere bei technischen Textilien ist hingegen gefordert, dass Beschichtungen abrasionsstabil sind, leicht aufzubringen und dass die Substrate nicht ständig feucht sind.

WO 2007/079841 beschreibt Nanopartikel. Derartige Nanopartikel werden in wasserfreier Form, beispielsweise in gefriergetrockneter Form, zur Ausrüstung von Substraten wie beispielsweise Textil eingesetzt. Nach der Hydrophilierung mit den Nanopartikeln wird durch eine chemische Nachbehandlung hydrophobiert. Die Haftung der Nanopartikel auf dem Textil ist jedoch in der Regel nicht ausreichend.

Es bestand also die Aufgabe, ein Verfahren zur Behandlung von textilen Substraten bereit zu stellen, das die vorstehend diskutierten Nachteile vermeidet. Weiterhin bestand die Aufgabe, textile Substrate bereit zu stellen, die einerseits eine hohe Abrasionsbeständigkeit aufweisen und andererseits nicht anschmutzen.

Dementsprechend wurde das eingangs definierte Verfahren gefunden.

Das eingangs definierte Verfahren wird im Rahmen der vorliegenden Anmeldung auch als erfindungsgemäßes Verfahren bezeichnet.

Das erfindungsgemäße Verfahren geht aus von textilen Substraten. Unter textilen Substraten, auch kurz Textilien genannt, werden im Rahmen der vorliegenden Erfindung Textilfasern, textile Halb- und Fertigfabrikate und daraus hergestellte Fertigwaren verstanden, die neben Textilien für die Bekleidungsindustrie bevorzugt Teppiche und andere Heimtextilien sowie insbesondere technischen Zwecken dienende textile Gebilde umfassen. Dazu gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze und Watten. Bevorzugt handelt es sich bei textilem Substrat um ein textiles Flächengebilde, beispielsweise ein Gewebe, ein Gewirke, eine Strickware, ein Gelege oder einen Vliesstoff (Non-woven). Textile Substrate bzw. Textilien können natürlichen Ursprungs sein, beispielsweise Baumwolle, Wolle oder Flachs, oder synthetisch, beispielsweise Polyamid, Polyester, modifiziertem Polyester, Polyestermischgewebe, Polyamidmischgewebe, Polyacrylnitril, Triacetat, Acetat, Polycarbonat, Polypropylen, Polyvinylchlorid, Polyestermikrofasern und Glasfasergewebe.

Textiles Substrat kann vor der Durchführung des erfindungsgemäßen Verfahrens vorbehandelt sein. Insbesondere kann es sich bei textilem Substrat um gefärbtes oder bedrucktes Textil handeln. Auch kann es sich bei textilem Substrat um ausgerüstetes Textil, beispielsweise mit Biozid ausgerüstetes Textil handeln.

In einer anderen Ausführungsform der vorliegenden Erfindung handelt es sich bei textilem Substrat um nicht vorbehandeltes Textil.

Textiles Substrat kann beschichtet sein. In einer anderen Ausführungsform der vorliegenden Erfindung handelt es sich bei textilem Substrat um nicht beschichtetes Textil.

Erfindungsgemäß behandelt man mit einer wässrigen Formulierung. Man kann einmal oder mehrfach mit nachstehend beschriebener wässriger Formulierung behandeln, wobei für den Fall, dass man mehrere Behandlungsschritte durchzuführen wünscht, die wässrigen Formulierungen jeweils gleich sein oder eine abweichende Zusammensetzung aufweisen können.

Im erfindungsgemäßen Verfahren eingesetzte wässrige Formulierung enthält
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten,
und die zumindest 50 Gew.-%, bevorzugt mindestens 90 Gew.-%, besonders bevorzugt 91 bis 99 Gew.-% Wasser enthält, bezogen auf im erfindungsgemäßen Verfahren eingesetzte wässrige Formulierung,
und wobei die wässrige Formulierung frei ist von organischen Fluorverbindungen.

Unter organischen Fluorverbindungen sind solche Verbindungen zu verstehen, die mindestens eine C-F-Bindung aufweisen.

Insbesondere führt man im erfindungsgemäßen Verfahren keine Schritte durch, in denen organische Fluorverbindungen eingesetzt werden.

Unter "frei von organischen Fluorverbindungen" wird im Rahmen der vorliegenden Erfindung verstanden, dass der Anteil an organischen Fluorverbindungen geringer ist als 0,1 Gew.-%, bezogen auf im erfindungsgemäßen Verfahren eingesetzte wässrige Formulierung, bevorzugt geringer als 0,01 Gew.-%. Besonders bevorzugt lässt sich mit gängigen Methoden wie beispielsweise Elementaranalyse oder mit Gaschromatographie gekoppelter Massenspektrometrie (GC-MS) keine organische Fluorverbindung in der im erfindungsgemäßen Verfahren eingesetzten wässrigen Formulierung nachweisen.

Im erfindungsgemäßen Verfahren eingesetzte wässrige Formulierung enthält
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten,
im Rahmen der vorliegenden Erfindung auch kurz als Hydrolyseprodukte von Siliziumverbindung (a) oder auch Hydrolyseprodukte (a) bezeichnet. Die betreffende Siliziumverbindung kann dann auch als Siliziumverbindung (a) bezeichnet werden. Dabei kann es sich bei Hydrolyseprodukten um Produkte einer partiellen oder vollständigen Hydrolyse handeln, und im Verlaufe der Hydrolyse können bereits Kondensationsreaktionen eintreten oder eingetreten sein.

Siliziumverbindung (a) wählt man vorzugsweise aus Verbindungen, die als diskrete und definierte Moleküle vorliegen.

Bei Siliziumverbindung (a) kann es sich um Verbindungen mit einem bis zu 5 Siliziumatomen pro Molekül handeln, die miteinander über Sauerstoffatome oder über C₁-C₅-Alkylenketten verbunden sein können. Hydrolysierbare Gruppen X¹ können mit unterschiedlichen Si-Atomen verknüpft sein oder vorzugsweise mindestens zwei mit dem gleichen Si-Atom.

Siliziumverbindung (a) kann 2, drei oder mehr Si-Atome pro Molekül aufweisen, bevorzugt weist es nur ein Si-Atom pro Molekül auf und entspricht der Formel Si(X¹)₄.

Siliziumverbindung (a) weist mindestens 4, beispielsweise 5, 6 bis 9 oder vorzugsweise 4 hydrolysierbare Gruppen X¹ pro Molekül auf. Dabei sind X¹ gleich oder verschieden sind und gewählt aus

C₁-C₁₀-Alkoxy, beispielsweise iso-Propoxy, bevorzugt n-C₁-C₁₀-Alkoxy, beispielsweise Methoxy, Ethoxy, n-Propoxy, n-Butoxy, n-Pentoxy, n-Decoxy, besonders bevorzugt n-C₁-C₄-Alkoxy, ganz besonders bevorzugt Methoxy und Ethoxy,

C₁-C₄-Carbonsäureresten, beispielsweise Formyl H-COO, Propionyl C₂H₅COO und insbesondere Acetyl CH₃COO,
und Epoxidgruppenhaltigen Resten, die unmittelbar oder über einen Spacer A¹ an das betreffende Si-Atom gebunden sein können. Bevorzugte Beispiele sind

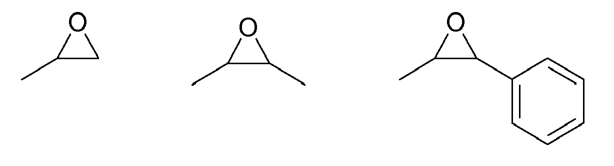

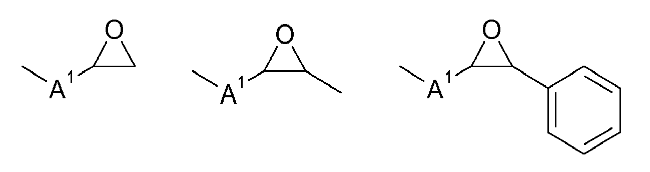

Dabei sind die Variablen wie folgt definiert:
- A¹: ist gewählt aus Alkylen, verzweigt oder vorzugsweise unverzweigt, bevorzugt (CH₂)_{y}, wobei ein bis drei nicht-benachbarte CH₂-Gruppen durch je ein Sauerstoffatom ersetzt sein können,
- y: ist gewählt aus ganzen Zahlen im Bereich von eins bis zehn, bevorzugt 2 bis 6 und besonders bevorzugt 5.

In einer Ausführungsform der vorliegenden Erfindung ist mindestens eine Gruppe X¹ gewählt aus A¹-Glycidyl, wobei die Variablen wie vorstehend gewählt sind.

Vorzugsweise ist mindestens eine Gruppe in Siliziumverbindung (a) C₁-C₁₀-Alkoxy, besonders bevorzugt sind in Siliziumverbindung (a) drei oder vier Gruppen X¹ gewählt aus C₁-C₁₀-Alkoxy, verschieden oder jeweils gleich.

Unter hydrolysierbar ist im Zusammenhang mit der vorliegenden Erfindung zu verstehen, dass eine Gruppe X¹ beispielsweise bei Temperaturen bis zu 100°C und Atmosphärendruck abgespalten werden kann, wie es vorzugsweise bei C₁-C₁₀-Alkoxy der Fall ist, oder dass er unter Bedingungen der Hydrolyse in wässrigem Medium umgewandelt wird, beispielsweise Epoxidgruppen, die eine Ringöffnungsreaktion eingehen können.

Siliziumverbindung (a) kann in Wasser partiell oder vollständig hydrolysieren. Eine vollständige Hydrolyse kann vorzugsweise in Gegenwart von Katalysator, insbesondere Säure oder Base, oder in Gegenwart eines organischen Lösungsmittels erfolgen, beispielsweise eines Alkohols. Auch durch Erwärmen, beispielsweise auf Temperaturen im Bereich von 30 bis 80°C, kann die vollständige Hydrolyse erreicht werden.

Bei der Hydrolyse - partiell oder vollständig - erfolgt in der Regel auch eine Kondensation unter Bildung von vernetzten Ketten oder dreidimensionalen Gebilden, deren Struktur jeweils im Wesentlichen durch Si-O-Si-Einheiten gebildet wird.

Siliziumverbindung (a) kann für den Fall, dass es mehr als ein Si-Atom aufweist, auch eine oder mehrere nicht-hydrolysierbare Gruppen tragen. Unter nicht-hydrolysierbaren Gruppen werden solche Gruppen verstanden, die direkt an ein Si-Atom gebunden sind, die aber mit Wasser bei Zimmertemperatur nicht unter Abspaltung vom Si-Atom reagieren. Beispiele sind Alkyl, Aryl, Cycloalkyl, Alkenyl, Silyl, Disilyl und Trisilyl, jeweils nicht funktionalisiert oder funktionalisiert, beispielsweise mit Sauerstoff, Stickstoff, Schwefel, Phosphor oder Halogen, und jeweils substituiert oder unsubstituiert. Bevorzugte Beispiele für Silyl ist Tri-C₁-C₁₀-alkylsilyl, insbesondere Trimethylsilyl, und Phenyldi-C₁-C₁₀-alkylsilyl. Bevorzugte Beispiele für Disilyl und Trisilyl sind Penta-C₁-C₁₀-alkylsilyl, insbesondere Pentamethyldisilyl, und Hepta-C₁-C₁₀-alkyltrisilyl, insbesondere Heptamethyltrisilyl.

In einer Ausführungsform der vorliegenden Erfindung handelt es sich bei Siliziumverbindung (a) um Tetraethoxysilan, Tetramethoxysilan, Tetra-n-butoxysilan, 3-Glycidylpropyltrimethoxysilan, 3-Glycidylpropyltriethoxysilan oder Mischungen von mindestens zwei der vorstehend genannten Siliziumverbindungen (a).

In einer Ausführungsform der vorliegenden Erfindung enthält im erfindungsgemäßen Verfahren eingesetzte wässrige Formulierung weiterhin mindestens ein anorganisches Oxid (b) in partikulärer Form, im Rahmen der vorliegenden Erfindung auch kurz als Oxid (b) bezeichnet, wobei die Primärpartikel einen Durchmesser im Bereich von 5 bis 150 nm aufweisen. Dabei soll unter dem Durchmesser der Mittelwert verstanden werden, bestimmbar beispielsweise durch dynamische Lichtstreuung. Beispiele für Oxide (b) sind TiO₂, Al₂O₃, ZrO₂, ZnO, CeO₂ und insbesondere SiO₂, beispielsweise jeweils als Sol und insbesondere als Kieselsäuresol oder als so genanntes pyrogenes Kieselgel. Weiterhin geeignet sind Mischoxide der vorstehend genannten Oxide. TiO₂, Al₂O₃ und SiO₂ können hydrophobiert sein, insbesondere in situ hydrophobiert. TiO₂ kann zumindest partiell als Anatas vorliegen.

In einer Ausführungsform der vorliegenden Erfindung ist Oxid (b) organisch modifiziert, beispielsweise mit einer oder mehreren Siliziumverbindungen (a). Eine derartige Modifizierung kann in situ erfolgen oder in einem separaten Schritt.

In einer Ausführungsform der vorliegenden Erfindung setzt man zur Herstellung von wässriger Formulierung mindestens eine Säure (c) ein, insbesondere eine Brønsted-Säure, beispielsweise Schwefelsäure, Halogenwasserstoffsäuren wie insbesondere Salzsäure, Carbonsäure wie beispielsweise Essigsäure oder Ameisensäure oder sauer reagierende Salze wie beispielsweise Ammoniumchlorid, Ammoniumsulfat oder Aluminiumsulfat oder Alaun, insbesondere Kaliumaluminiumsulfat KAl(SO₄)₂·12 H₂O.

In einer Ausführungsform der vorliegenden Erfindung setzt man im erfindungsgemäßen Verfahren die wässrige Formulierung in einer partiell oder vollständig neutralisierten Form ein, so dass sie einen pH-Wert im Bereich von 6 bis 9,5 aufweist. Zum Neutralisieren kann man beispielsweise basische Alkalimetallverbindung einsetzen, beispielsweise Alkalimetallhydroxide, Alkalimetallcarbonate oder Alkalimetallhydrogencarbonate, wobei als Alkalimetalle insbesondere Kalium und Natrium zu nennen sind. In einer Ausführungsform der vorliegenden Erfindung setzt man zum Neutralisieren Ammoniak ein.

In einer anderen Ausführungsform der vorliegenden Erfindung setzt man im erfindungsgemäßen Verfahren die wässrige Formulierung in nicht neutralisierter Form ein, so dass sie einen pH-Wert im Bereich von 1 bis 4 aufweist. Dabei werden pH-Werte im Bereich von 2,5 bis 4 vorzugsweise durch Verdünnen mit Wasser eingestellt.

In einer Ausführungsform der vorliegenden Erfindung enthält im erfindungsgemäßen Verfahren eingesetzte wässrige Formulierung weiterhin Hydrolyseprodukte von mindestens einer Siliziumverbindung (d) der allgemeinen Formel (X¹)ₙSi(R¹)₄₋ₙ enthält, wobei die Variablen wie folgt definiert sind:
- n: ist eine Zahl im Bereich von 2 bis 3 und kann einen Mittelwert darstellen,
- R¹: ist gewählt aus C₁-C₁₀-Alkyl, bevorzugt primäres oder sekundäres C₁-C₁₀-Alkyl, beispielsweise Methyl, Ethyl, n-Propyl, Isopropyl, n-Butyl, Isobutyl, sec.-Butyl, n-Pentyl, Isopentyl, n-Hexyl, n-Heptyl, n-Octyl, n-Nonyl, n-Decyl,
C₆-C₁₄-Aryl, unsubstituiert oder ein- oder mehrfach mit vorzugsweise C₁-₄-Alkyl, Hydroxy oder Amino substituiert, beispielsweise 1-Naphthyl, 2-Naphthyl, 1-(2-Methylnaphthyl), bevorzugt Phenyl, Benzyl, 2-Methylphenyl, 4-Methylphenyl, 2,6-Dimethylphenyl, para-Hydroxyphenyl,
C₃-C₁₀-Cycyloalkyl, unsubstituiert oder ein- oder mehrfach vorzugsweise mit C₁-₄-Alkyl substituiert, Hydroxy oder Amino, beispielsweise Cyclopentyl, Cyclohexyl, Cycloheptyl, Cyclooctyl,
C₂-C₁₀-Alkenyl, insbesondere Vinyl, ω-Allyl und Isobutenyl,
A¹-OH, bevorzugt CH₂-OH, CH₂-CH₂-OH, (CH₂)₃-OH, (CH₂)₄-OH, (CH₂)₁₀-OH, CH(CH₃)-OH, C(CH₃)₂-OH, CH(CH₃)-CH(CH₃)-OH,
A¹-NH₂, bevorzugt CH₂-NH₂, CH₂-CH₂-NH₂, (CH₂)₃-NH₂, (CH₂)₄-NH₂, (CH₂)₁₀-NH₂, CH(CH₃)-NH₂, C(CH₃)₂-NH₂, CH(CH₃)-CH(CH₃)-NH₂,
A¹-NHR², bevorzugt CH₂-NHCH₃, CH₂-CH₂-NHCH₃, (CH₂)₃-NHCH₃, (CH₂)₄-NHCH₃, (CH₂)₁₀-NHCH₃, CH(CH₃)-NHCH₃, C(CH₃)₂-NHCH₃, CH(CH₃)-CH(CH₃)-NHCH₃, CH₂-NHC₂H₅, CH₂-CH₂-NHC₂H₅, (CH₂)₃-NHC₂H₅, (CH₂)₄-NHC₂H₅, (CH₂)₁₀-NHC₂H₅, CH(CH₃)-NHC₂H₅, C(CH₃)₂-NHC₂H₅, CH(CH₃)-CH(CH₃)-NHC₂H₅,
CH₂-NH-CH(CH₃)₂, CH₂-CH₂-NH-CH(CH₃)₂, (CH₂)₃-NH-CH(CH₃)₂,
A¹-N(R²)₂, bevorzugt CH₂-N(CH₃)₂, CH₂-CH₂-N(CH₃)₂, (CH₂)₃-N(CH₃)₂, (CH₂)₄-N(CH₃)₂, (CH₂)₁₀-N(CH₃)₂, CH(CH₃)-N(CH₃)₂, C(CH₃)₂-N(CH₃)₂, CH(CH₃)-CH(CH₃)-N(CH₃)₂,
CH₂-N(C₂H₅)₂, CH₂-CH₂-N(C₂H₅)₂, (CH₂)₃-N(C₂H₅)₂,
(CH₂)₄-N(C₂H₅)₂, (CH₂)₁₀-N(C₂H₅)₂, CH(CH₃)-N(C₂H₅)₂, C(CH₃)₂-N(C₂H₅)₂, CH(CH₃)-CH(CH₃)-N(C₂H₅)₂,
A¹-Glycidyl, beispielsweise CH₂-Glycidyl, (CH₂)₂-Glycidyl, (CH₂)₃-Glycidyl
Silyl, Disilyl, Trisilyl, insbesondere Tri-C₁-C₄-alkylsilyl, Penta-C₁-C₄-alkylsilyl, Hepta-C₁-C₄-alkylsilyl,
- R²: gleich oder verschieden und gewählt aus C₁-C₄-Alkyl, insbesondere Methyl oder Ethyl, weiterhin Benzyl oder Phenyl, wobei zwei Reste R² auch gemeinsam unter Bildung eines Ringes C₄-C₁₀-Alkylen, bevorzugt C₄-C₅-Alkylen sein können,

Besonders bevorzugte Beispiele für Siliziumverbindungen (d) sind Methyltriethoxysilan, Methyltrimethoxysilan, Ethyltrimethoxysilan, Ethyltriethoxysilan, n-Butyltriethoxysilan, n-Butyltrimethoxysilan, n-Octyltriethoxysilan, n-Octyltrimethoxysilan, 2-Aminoethyltrimethoxysilan, 2-Aminoethyltriethoxysilan, 3-Aminopropyltrimethoxysilan, 3-Aminopropyltriethoxysilan.

In einer Ausführungsform der vorliegenden Erfindung weist im erfindungsgemäßen Verfahren eingesetzte wässrige Formulierung einen Feststoffgehalt im Bereich von 1 bis 50 Gew.-%, bevorzugt 1,5 bis 10 Gew.-% auf, wobei der Bestandteil an Siliziumverbindung (a) in vollständig hydrolysierter und entwässerter Form, gegebenenfalls ebenfalls als SiO₂, gemessen wird.

In einer Ausführungsform der vorliegenden Erfindung setzt man zur Herstellung von im erfindungsgemäßen Verfahren eingesetzter wässriger Formulierung ein:
im Bereich von 1 bis 50 Gew.-%, bevorzugt 1,5 bis 10 Gew.-% Siliziumverbindung (a), im Bereich von null bis 25, bevorzugt 0,2 bis 12 Gew.-% Oxid (b),
im Bereich von null bis 35 Gew.-%, bevorzugt 0,05 bis 7 Gew.-% Siliziumverbindung (d),
wobei Angaben in Gew.- % jeweils auf gesamte wässrige Formulierung bezogen sind und im Falle von Siliziumverbindung (a) und Siliziumverbindung (d) die vollständig hydrolysierte und entwässerte Siliziumverbindung (a) bzw. (d), gegebenenfalls als SiO₂, bezeichnen.
In einer Ausführungsform der vorliegenden Erfindung enthält die im erfindungsgemäßen Verfahren eingesetzte Formulierung mindestens eine Verbindung der allgemeinen Formel X¹-H, wobei X¹ wie vorstehend definiert ist. X¹-H kann beispielsweise durch Hydrolyse von Siliziumverbindung (a) gebildet sein. Insbesondere dann, wenn X¹ aus C₁-C₁₀-Alkoxy gewählt wird, enthält wässrige Formulierung Verbindung X¹-H. Man kann jedoch auch weitere Verbindung der allgemeinen Formel X¹-H zusetzen.

Im erfindungsgemäßen Verfahren eingesetzte wässrige Formulierung kann ein oder mehrere Hilfsstoff(e) (e) enthalten, beispielsweise Entlüfter, Netzmittel, Antimigrationsmittel, Weichmacher, organische Bindemittel und/oder Vernetzer, der thermisch oder durch UVV/vis-Strahlung aktivierbar sein kann.

Geeignete Netzmittel, die auch als Emulgatoren wirken können, sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Trockene textile Gewebe, Garne, Filamente, Gewirke oder Vliese enthalten in vielen Fällen eine große Menge von Luft. Daher ist der Einsatz von Entlüftern vorteilhaft. Diese basieren beispielsweise auf Polyethersiloxan-Copolymeren. Sie können in Mengen von 0,01 bis 2 g/l in den erfindungsgemäßen Flotten enthalten sein.

Weiterhin können im erfindungsgemäßen Verfahren eingesetzte wässrige Formulierungen Antimigrationsmittel enthalten. Geeignete Antimigrationsmittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol. Weitere geeignete Antimigrationsmittel sind Polyacrylamide.

Bevorzugte Hilfsstoff(e) (e) sind Weichmacher, im Rahmen der vorliegenden Erfindung auch als Weichmacher (f) bezeichnet.

Beispielhaft für als Hilfsstoffe (e) geeignete Weichmacher (f) sind Esterverbindungen, gewählt aus den Gruppen der mit Alkanolen vollständig veresterten aliphatischen, cycloaliphatischen oder aromatischen Di- oder Polycarbonsäuren und der mindestens einfach mit Alkanol veresterten Phosphorsäure. Andere, besonders geeignete Weichmacher (f) sind Polydialkylsiloxane, die eine oder mehrere funktionelle Gruppen enthalten können.

In einer Ausführungsform der vorliegenden Erfindung handelt es sich bei Alkanolen um C₁-C₁₀-Alkanole.

Bevorzugte Beispiele für mit Alkanol vollständig veresterte aromatische Di- oder Polycarbonsäuren sind mit Alkanol vollständig veresterte Phthalsäure, Isophthalsäure und Mellithsäure; beispielhaft seien genannt: Di-n-octylphthalat, Di-n-nonylphthalat, Di-n-decylphthalat, Di-n-octylisophthalat, Di-n-nonylisophthalat, Di-n-decylisophthalat.

In einer anderen Ausführungsform handelt es sich bei Weichmacher (f) um so genanntes DINCH oder verwandte Moleküle, also mit C₁-C₁₀-Alkanol vollständig veresterte 1,2-Cyclohexandicarbonsäure, beispielsweise als Isomerengemisch. Besonders bevorzugt ist der Diisononylester von 1,2-Cyclohexandicarbonsäure.

Bevorzugte Beispiele für mit Alkanol vollständig veresterte aliphatische Di- oder Polycarbonsäuren sind beispielsweise Adipinsäuredimethylester, Adipinsäurediethylester, Adipinsäuredi-n-butylester, Adipinsäurediisobutylester, Glutarsäuredimethylester, Glutarsäurediethylester, Glutarsäuredi-n-butylester, Glutarsäurediisobutylester, Bernsteinsäuredimethylester, Bernsteinsäurediethylester, Bernsteinsäuredi-n-butylester Bernsteinsäurediisobutylester sowie Mischungen der vorstehend genannten Verbindungen.

Bevorzugte Beispiele für mindestens einfach mit Alkanol veresterte Phosphorsäure sind C₁-C₁₀-Alkyl-di-C₆-C₁₄-Aryl-Phosphate wie Isodecyldiphenylphosphat.

Weitere geeignete Beispiele für Weichmacher sind mindestens einfach mit C₁-C₁₀-Alkylcarbonsäure mindestens einfach veresterte aliphatische oder aromatische Di- oder Polyole.

Bevorzugte Beispiele für mindestens einfach mit C₁-C₁₀-Alkylcarbonsäure veresterte aliphatische oder aromatische Di- oder Polyole ist 2,2,4-Trimethylpentan-1,3-diol-monoisobutyrat.

Weitere geeignete Weichmacher (f) sind Polyester, erhältlich durch Polykondensation von aliphatischer Dicarbonsäure und aliphatischem Diol, beispielsweise Adipinsäure oder Bernsteinsäure und 1,2-Propandiol, vorzugsweise mit einem M_{w} von 200 g/mol, und Polypropylenglykolalkylphenylether, vorzugsweise mit einem M_{w} von 450 g/mol.

Weitere geeignete Weichmacher (f) sind mit zwei verschiedenen Alkoholen veretherte Polypropylenglykole mit einem Molekulargewicht M_{w} im Bereich von 400 bis 800 g/mol, wobei vorzugsweise einer der Alkohole ein Alkanol, insbesondere ein C₁-C₁₀-Alkanol sein kann und der andere Alkohol vorzugsweise ein aromatischer Alkohol, beispielsweise o-Kresol, m-Kresol, p-Kresol und insbesondere Phenol sein kann.

Weitere besonders gut geeignete Weichmacher (f) sind Polydialkylsiloxane, im Rahmen der vorliegenden Erfindung auch als Polydialkylsiloxan (f) bezeichnet. Als Alkylgruppen in Polydialkylsiloxan (f) sind C₁-C₁₀-Alkylgruppen geeignet, die verschieden oder vorzugsweise gleich sein können. Bevorzugte Beispiele für C₁-C₁₀-Alkylgruppen sind Methyl, Ethyl, n-Propyl, Isopropyl, n-Butyl, Isobutyl, n-Octyl und n-Decyl. Ganz besonders bevorzugt sind die Alkylgruppen in Polydialkylsiloxan (f) jeweils gleich und Methyl, und es handelt sich somit um Polydimethylsiloxan.

Als Endgruppen an den terminalen Si-Atomen kann Polydialkylsiloxan (f) Hydroxylgruppen oder Trialkylsilylgruppen aufweisen.

Als funktionelle Gruppen kann Polydialkylsiloxan (f) eine oder mehrere Aminoalkylgruppen pro Molekül aufweisen.

In einer Ausführungsform der vorliegenden Erfindung weist Polydialkylsiloxan (f) im Mittel (Zahlenmittel) 5 bis 100 Si-Atome pro Molekül auf.

In einer Ausführungsform der vorliegenden Erfindung liegt Polydialkylsiloxan (f) in der im erfindungsgemäßen Verfahren eingesetzten Formulierung in emulgierter oder dispergierter Form vor.

In einer Ausführungsform der vorliegenden Erfindung kombiniert man einen oder mehrere der vorstehend genannten Weichmacher (f) mit einem oder mehreren Hilfsweichmachern (g). Als Hilfsweichmacher können beispielsweise Wachse dienen, beispielsweise Polyethylenwachse. Besonders geeignete Hilfsweichmacher sind so genannte Wachs-Oxidate, das sind partiell oxidierte Polyolefinwachse mit einer Säurezahl im Bereich von 10 bis 100 mg KOH/g, bestimmbar beispielsweise nach DIN 53402.

Weitere geeignete Hilfsstoff(e) (e) sind Bindemittel, insbesondere organische Bindemittel.

Organische Bindemittel im Sinne der vorliegenden Erfindung sind emulgierte oder dispergierte filmbildende Polymere, die auch Copolymere mit einschließen. Als organische Bindemittel kann man sowohl Dispersionen, Emulsionen als auch Organisole von (Co)polymeren wie beispielsweise Polyacrylaten, Polyurethanen, Polybutadien, Polyolefinen wie Polyethylen oder Polypropylen und deren Copolymere verwenden. Bevorzugt sind Dispersionen oder Emulsionen von Polyacrylaten oder Polyurethanen.

Geeignete Polyacrylate, die als organische Bindemittel im Sinne der vorliegenden Erfindung bevorzugt zu nennen sind, sind solche Copolymerisate, insbesondere Emulsionscopolymerisate von mindestens einer einfach ethylenisch ungesättigten Carbonsäure oder Dicarbonsäure wie beispielsweise Maleinsäure, Fumarsäure, Crotonsäure, Itaconsäure oder bevorzugt (Meth)acrylsäure mit mindestens einem Comonomer wie beispielsweise mindestens einem C₁-C₁₀-Alkylester von mindestens einer einfach ethylenisch ungesättigten Carbonsäure oder Dicarbonsäure, insbesondere seien Methyl(meth)acrylat, Ethylacrylat, n-Butylacrylat und 2-Ethylhexylacrylat genannt, und/oder mindestens einem weiteren Comonomer, gewählt aus beispielsweise Vinylaromaten, beispielsweise para-Methylstyrol, α-Methylstyrol und insbesondere Styrol, und stickstoffhaltigen Comonomeren wie (Meth)acrylamid, (Meth)acrylnitril.

In einer Ausführungsform der vorliegenden Erfindung enthalten Polyacrylate, die als Bindemittel geeignet sind, mindestens ein reaktives Comonomer einpolymerisiert, gewählt aus Glycidyl(meth)acrylat, Acetoacetyl(meth)acrylat und N-Methylol-(meth)acrylamid.

Geeignete Polyurethane, die als organische Bindemittel im Sinne der vorliegenden Erfindung bevorzugt zu nennen sind, sind hydroxylterminierte Polyurethane, die durch Reaktion von mindestens einem Polyesterol, beispielsweise einem Kondensationsprodukt einer aliphatischen Dicarbonsäure wie Bernsteinsäure, Glutarsäure und insbesondere Adipinsäure mit mindestens einem aliphatischen Diol, beispielsweise 1,6-Hexandiol, 1,4-Butandiol, Neopentylglykol, Ethylenglykol oder Diethylenglykol, und einem Diisocyanat oder Polyisocyanat und gegebenenfalls weiteren Reaktionspartnern hergestellt werden können. Geeignete Diisocyanate sind aliphatische, cycloaliphatische und aromatische Diisocyanate, insbesondere Hexamethylendiisocyanat (HDI), Dodecamethylendiisocyanat, 4,4'-Diisocyanatocylohexylmethan (MDI), Cyclohexan-1,4-diisocyanat, Isophorondiisocyanat (IPDI) und aromatische Diisocyanate wie beispielsweise Toluylendiisocyanat (TDI).

Als weitere Reaktionspartner seien beispielsweise Diole, insbesondere 1,4-Butandiol, und säuregruppenhaltige Moleküle, insbesondere säuregruppenhaltige Diole und säuregruppenhaltige Diamine genannt, z. B. 3,3-Dihydroxymethylolpropionsäure und die Verbindung H₂N-CH₂CH₂-NH-CH₂CH₂-SO₃M, wobei M Wasserstoff sein kann oder ein Alkalimetall.

Geeignete thermisch aktivierbare Vernetzer sind beispielsweise Carbodiimide, insbesondere oligomere oder polymere Carbodiimide, wie man sie beispielsweise durch trockenes Erhitzen von Diisocyanaten erhalten kann, weiterhin Melamin-FormaldehydHarze, DMDHEU und Glyoxal. Beispiele für durch UV/vis-Strahlung aktivierbare Vernetzer sind (Meth)acrylate, insbesondere Acrylate mit mindestens einer weiteren funktionellen Gruppe, weiterhin Di-, Tri- und Polyacrylate von Di-, Tri- bzw. Polyolen. Ganz besonders bevorzugte durch UV/vis-Strahlung aktivierbare Vernetzer sind ω-Hydroxyalkyl(meth)acrylate, insbesondere 2-Hydroxyethylacrylat und 3-Hydroxypropylacrylat, Mono-(meth)acrylate von Mono-, Di-, Tri- oder Polyethylenglykol, Mono-(meth)acrylate von Mono-, Di-, Tri- oder Polypropylenglykol, Di-(meth)acrylate von Mono-, Di-, Tri- oder Polyethylenglykol, Di-(meth)acrylate von Mono-, Di-, Tri- oder Polypropylenglykol, Di(meth)acrylate von α,ω-Di-C₂-C₁₀-Alkandiolen, insbesondere Diacrylate von 1,4-Butandiol und von 1,6-Hexandiol, Di- und Tri(meth)acrylate von 1,1,1-Trihydroxymethylolethan, von 1,1,1-Trihydroxymethylolpropan oder von 1,1,1-Trihydroxymethylolbutan.

Weitere Beispiele für durch UV/vis-Strahlung aktivierbare Vernetzer sind 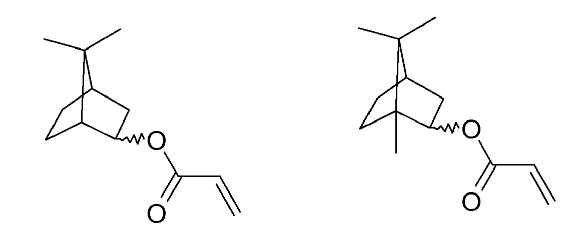 und die korrespondierenden Methacrylate, weiterhin Isobornyl(meth)acrylat.

In einer Ausführungsform enthält im erfindungsgemäßen Verfahren eingesetzte Formulierung insgesamt bis zu 35 Gew.-% Hilfsstoff(e) (e).

In einer Ausführungsform enthält im erfindungsgemäßen Verfahren eingesetzte Formulierung bis zu 15 Gew.-% Weichmacher (f).

Zur Durchführung des erfindungsgemäßen Verfahrens behandelt man mit einer wie vorstehend beschrieben hergestellten wässrigen Formulierung, die man zur Herstellung einer Flotte mit Wasser verdünnen oder unverdünnt einsetzen kann.

Die Behandlung kann kontinuierlich oder diskontinuierlich erfolgen, manuell oder vorzugsweise maschinell.

In einer Ausführungsform der vorliegenden Erfindung behandelt man, indem man mittels eines Auftragssystems aufträgt, gewählt aus Spray, Druckschablonen, Kiss-Roll, Foulard, Walzenrakel und Luftrakel. Als Verfahrensarten kann man beispielsweise wählen: Sprühen, Spritzen, Tauchen, Klotzen und Imprägnieren.

In einer Ausführungsform der vorliegenden Erfindung führt man das erfindungsgemäße Verfahren in Maschinen durch, die für die Ausrüstung von Textilien bevorzugt eingesetzt werden, insbesondere Foulards. Bevorzugt sind Foulards mit senkrechtem Textileinzug, die als wesentliches Element zwei aufeinander gepresste Rollen enthalten, durch die das Textil geführt wird. Oberhalb der Rollen ist vorzugsweise wässrige Formulierung eingefüllt und benetzt das Textil. Durch den Druck wird das Textil abgequetscht und ein konstanter Auftrag gewährleistet. Bei anderen bevorzugten Foulards wird Textil zunächst durch ein Tauchbad geführt und anschließend nach oben durch zwei aufeinander gepresste Rollen. In letzterem Falle spricht man auch von Foulards mit senkrechtem Textileinzug von unten. Foulards sind beispielsweise beschrieben in Hans-Karl Rouette, "Handbuch der Textilveredlung", Deutscher Fachverlag 2003, S. 618 bis 620.

In einer Ausführungsform der vorliegenden Erfindung liegt die Flottenaufnahme im erfindungsgemäßen Verfahren im Bereich von 10 bis 200%, bevorzugt 20 bis 100%.

In einer Ausführungsform der vorliegenden Erfindung verwendet man einen Foulard und stellt den Anpressdruck der Rollen so ein, dass er im Bereich von 1 bis 10 bar liegt, bevorzugt bis 3 bar.

In einer Ausführungsform der vorliegenden Erfindung wählt man den Vorzug von Textil so, dass er im Bereich von 1 bis 80 m/min beträgt, bevorzugt 1 bis 30 m/min.

In einer Ausführungsform der vorliegenden Erfindung kann im erfindungsgemäßen Verfahren eingesetzte wässrige Formulierung oder Flotte eine Temperatur im Bereich von 25 bis 60°C aufweisen. Bevorzugt weist sie Zimmertemperatur auf.

In einer Ausführungsform der vorliegenden Erfindung trägt man im Bereich von 2 bis 200 g/m², bevorzugt von 5 bis 100 g/m² Feststoff auf zu behandelndes textiles Substrat auf.

In einer Ausführungsform der vorliegenden Erfindung enthält im erfindungsgemäßen Verfahren eingesetzte wässrige Formulierung weiterhin mindestens eine Base, bevorzugt mindestens eine organische Base, beispielsweise mindestens ein tertiäres Amin, besonders bevorzugt Imidazol oder N-Methylimidazol. Im erfindungsgemäßen Verfahren eingesetzte wässrige Formulierung kann insbesondere katalytische Mengen an Imidazol oder N-Methylimidazol enthalten, bezogen auf Siliziumverbindung (a), beispielsweise 0,001 bis 10 mol-%, bevorzugt bis 5 mol-%.

In einer Ausführungsform der vorliegenden Erfindung führt man das erfindungsgemäße Verfahren so durch, dass man zunächst eine wässrige Formulierung herstellt, die Siliziumverbindung (a) und gegebenenfalls weitere Komponenten wie zusätzliches Wasser, Säure, Base, Siliziumverbindung der allgemeinen Formel (X¹)ₙSi(R¹)₄₋ₙ enthält, lässt - vorzugsweise unter Rühren - so lange reagieren, bis die Reaktion abgeklungen ist, danach kann man mit Wasser verdünnen, wenn es gewünscht ist, und gegebenenfalls partiell oder vollständig neutralisieren, und danach behandelt man ein textiles Substrat mit der so entstandenen Flotte.

In einer Ausführungsform der vorliegenden Erfindung behandelt man nach der Behandlung mit wässriger Formulierung thermisch, im Rahmen der vorliegenden Erfindung auch tempern genannt, und zwar kontinuierlich oder diskontinuierlich. Die Dauer der Temperung kann man in weiten Grenzen wählen. Üblicherweise kann man über die Dauer von etwa 1 Sekunde bis 30 Minuten, insbesondere bis 3 Minuten tempern. Zur Durchführung einer Temperung erhitzt man auf Temperaturen von 60°C bis zu 180°C, bevorzugt 150 bis 180°C. Natürlich ist es erforderlich, die Temperatur der Temperung an die Empfindlichkeit des Materials anzupassen, aus dem erfindungsgemäß behandeltes textiles Substrat besteht.

Vor der eigentlichen thermischen Behandlung kann man trocknen. Das Trocknen kann beispielsweise bei Temperaturen im Bereich von 20 bis 120°C geschehen. Durch Trocknen kann man beispielsweise die Restfeuchte auf einen Anteil von 3 bis 10 Gew.-%, bezogen auf behandeltes Textil, reduzieren.

Zum Trocknen kann man beispielsweise bei Atmosphärendruck arbeiten. Man kann jedoch stattdessen auch bei reduziertem Druck arbeiten, beispielsweise bei einem Druck im Bereich von 1 bis 850 mbar.

Zum Trocknen kann man mit einem gegebenenfalls erwärmten Gasstrom arbeiten, insbesondere mit einem gegebenenfalls erhitzten Inertgasstrom wie beispielsweise Stickstoff. Wünscht man einen erwärmten Gasstrom anzuwenden, so sind beispielsweise Temperaturen im Bereich von 30 bis 200°C, bevorzugt 120 bis 180°C, besonders bevorzugt 150 bis 170°C geeignet.

Durch die Ausführung des erfindungsgemäßen Verfahrens erhält man textile Substrate, die einerseits eine hohe Abrasionsbeständigkeit aufweisen und andererseits leicht zu reinigen sind und die ebenfalls ein Gegenstand der vorliegenden Erfindung sind.

Ein weiterer Gegenstand der vorliegenden Erfindung sind textile Substrate, die ausgerüstet sind mit mindestens einer hydrolysierten Siliziumverbindung (a). Wie sich durch mikroskopische Aufnahmen zeigen lässt, sind die Fasern oder Mikrofasern von entsprechenden erfindungsgemäßen textilen Substraten glatt und einheitlich beschichtet.

Ein weiterer Gegenstand der vorliegenden Erfindung ist die Verwendung von erfindungsgemäßen textilen Substraten als oder zur Herstellung von technischen Textilien.

Beispiele für derartige technische Textilien finden sich beispielsweise als oder als Bestandteil von Sitzen in Fahrzeugen, beispielsweise Autositzen, als Schutz gegen Witterung oder Sonneneinstrahlung, beispielsweise als oder als Bestandteil von Sonnensegeln, Dachersatz, Markisen, Sonnenschirmen oder Abdeckplanen, als Segel, insbesondere für Schiffe, und als oder als Bestandteil von Förderbändern. Bevorzugt verwendet man erfindungsgemäße textile Substrate zur Herstellung von Autositzen, Markisen oder Förderbänder oder für textiles Bauen.

Ein weiterer Gegenstand der vorliegenden Erfindung sind technische Textilien, umfassend oder bestehend aus einem erfindungsgemäßen textilen Substrat. Technische Textilien sind wie vorstehend definiert. Besonders bevorzugte technische Textilien sind Autositze, Markisen und Förderbänder.

Ein weiterer Gegenstand der vorliegenden Erfindung sind wässrige Formulierungen mit einem Wassergehalt von mindestens 50 Gew.-%, bevorzugt mindestens 90 Gew.-%, besonders bevorzugt 91 bis 99 Gew.-% Wasser enthält, bezogen auf erfindungsgemäße wässrige Formulierung, enthaltend
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten
und wobei die wässrige Formulierung frei ist von organischen Fluorverbindungen.

Vorzugsweise enthält erfindungsgemäße wässrige Formulierung weiterhin mindestens ein anorganisches Oxid (b) in partikulärer Form, wobei die Primärpartikel einen Durchmesser im Bereich von 5 bis 150 nm aufweisen.

Siliziumverbindung (a) und betreffende Hydrolyseprodukte sowie anorganische Oxid (b) in partikulärer Form sind vorstehend näher beschrieben.

In einer Ausführungsform der vorliegenden Erfindung weist erfindungsgemäße wässrige Formulierung einen pH-Wert im Bereich von 6 bis 9 auf. Gegebenenfalls erforderliche Zusätze zum Einstellen des pH-Werts sind vorstehend genannt.

In einer Ausführungsform der vorliegenden Erfindung ist mindestens eine Gruppe X¹ in Siliziumverbindung (a) gewählt aus A¹-Glycidyl,
wobei A¹ gewählt ist aus (CH₂)_{y}, wobei ein bis drei nicht-benachbarte CH₂-Gruppen durch je ein Sauerstoffatom ersetzt sein können,
und y gewählt ist aus ganzen Zahlen im Bereich von eins bis zehn.

In einer Ausführungsform der vorliegenden Erfindung enthält erfindungsgemäße wässrige Formulierung mindestens einen Weichmacher (e). Beispiele für Weichmacher (e) sind vorstehend genannt.

In einer Ausführungsform der vorliegenden Erfindung weist erfindungsgemäße wässrige Formulierung einen Feststoffgehalt im Bereich von 1 bis 50 Gew.-%, bevorzugt 2 bis 10 Gew.-% auf, wobei der Bestandteil an Siliziumverbindung (a) in vollständig hydrolysierter und entwässerter Form, gegebenenfalls ebenfalls als SiO₂, gemessen wird.

In einer Ausführungsform der vorliegenden Erfindung enthält erfindungsgemäße wässrige Formulierung:
im Bereich von 1 bis 50 Gew.-%, bevorzugt 1,5 bis 10 Gew.-% Siliziumverbindung (a), im Bereich von null bis 10 Gew.-%, bevorzugt 0,1 bis 5 Gew.-% Oxid (b),
im Bereich von null bis 20 Gew.-%, bevorzugt 0,1 bis 10 Gew.-% Siliziumverbindung (d),
im Bereich von null bis 20 Gew.-%, bevorzugt 1 bis 10 Weichmacher (f),
insgesamt im Bereich von null bis 20 Gew.-%, bevorzugt insgesamt 1 bis 10 von Weichmacher (f) verschiedene Hilfsstoff(e) (e),
wobei Angaben in Gew.- % jeweils auf gesamte wässrige Formulierung bezogen sind und im Falle von Siliziumverbindung (a) und Siliziumverbindung (d) die vollständig hydrolysierte und entwässerte Siliziumverbindung (a) bzw. (d), gegebenenfalls als SiO₂, bezeichnen.

In einer Ausführungsform der vorliegenden Erfindung setzt man zur Herstellung von im erfindungsgemäßen Verfahren eingesetzter wässriger Formulierung weiterhin mindestens eine Base ein, bevorzugt mindestens eine organische Base, beispielsweise mindestens ein tertiäres Amin, besonders bevorzugt Imidazol oder N-Methylimidazol.

Ein weiterer Gegenstand der vorliegenden Erfindung ist die Verwendung von erfindungsgemäßen Formulierungen zur Behandlung von textilen Substraten.

Ein weiterer Gegenstand der vorliegenden Erfindung ist ein Verfahren zur Herstellung von erfindungsgemäßen wässrigen Formulierungen. Zur Herstellung von erfindungsgemäßen wässrigen Formulierungen kann man so vorgehen, dass man Siliziumverbindung (a) und gegebenenfalls Siliziumverbindung (d) als Lösung, vorzugsweise als alkoholische Lösung vorlegt und danach Wasser und gegebenenfalls mindestens eine Säure (c) zusetzt.

Man kann während der anschließenden Hydrolyse vorzugsweise rühren. Wenn eine Trübung erreicht wird, so ist die Hydrolyse vorläufig beendet, und man kann, so es gewünscht ist, Oxid (b), Hilfsstoff(e) und Weichmacher (f) hinzugeben.

Erfindungsgemäße wässrige Formulierungen sind hervorragend geeignet, um das erfindungsgemäße Verfahren durchzuführen.

Die Erfindung wird durch Arbeitsbeispiele erläutert.

### Arbeitsbeispiele

### Chemikalien:

(b.1): pyrogenes TiO₂, davon 25% Anatas, Primärpartikeldurchmesser 21 nm, BET-Oberfläche 50 m²/g, kommerziell erhältlich als Aeroxide® TiO₂ P25
(b.2): SiO₂, Primärpartikeldurchmesser 9 nm, BET-Oberfläche von 300 m²/g, kommerziell erhältlich als 30% wässrige Dispersion.
(b.3) SiO₂, Primärpartikeldurchmesser 9 nm, BET-Oberfläche von 300 m²/g, kommerziell erhältlich als 30% wässrige Dispersion, umgesetzt mit 75 Gew.-% an 3-Glycidoxypropyltrimethoxysilan, bezogen auf SiO₂.
(e.1) 2-Ethylhexanol, alkoxyliert mit 15 mol Ethylenoxid und 4 mol Propylenoxid pro mol (g.1): Partiell oxidiertes Polyethylenwachs, Schmelzbereich 126-133°C, Säurezahl 18 mg KOH/g, bestimmt nach DIN 53402, als wässrige Emulsion, Feststoffgehalt 32%.

I. Vorgehen zur Herstellung von erfindungsgemäßen wässrigen Formulierungen
I.1 Herstellung einer wässrigen Formulierung eine Siliziumverbindung (a.1) mit vier hydrolysierbaren Gruppen

### I.1.1 Herstellung von Sol 1

Zu 60 ml 3-Glycidoxypropyltrimethoxysilan (a.1), gelöst in 60 ml Isopropanol, wurden unter Rühren 7,32 ml einer 0,01 molaren wässrigen Salzsäure gegeben. Man rührte eine Stunde bei Zimmertemperatur und erhielt Sol 1.

### 1.1.2 Herstellung weiterer Sole

Zu Siliziumverbindung(en) und 60 ml Isopropanol nach Tabelle 1 wurden 7,32 ml einer 0,01 molaren wässrigen Salzsäure gegeben. Man rührte eine Stunde bei Zimmertemperatur und erhielt Sole nach Tabelle 1.

**Tabelle 1:**

| Herstellrezepturen für Sole | | |
|---|---|---|
| Sol Nr. | (a.1) [ml] | (a.2) [ml] |
| 2 | - | 60 |
| 3 | 30 | 30 |
| 4 | 48 | 12 |
| 5 | 12 | 48 |

| | | |
|---|---|---|
| (a.2): Tetraethoxysilan, TEOS | | |

### 1.1.3 Herstellung von erfindungsgemäßen wässrigen Formulierungen und Vergleichsformulierung V-WF.1

### Herstellung von wässriger Formulierung V-WF.1:

Man vermischte in einem Rührgefäß 100 g (g.1) (tell qu'elle) und 5 g (e.1) und verdünnte mit Wasser auf einen Liter. Man verrührte mit einem Schnellrührer (Ultraturrax) und dispergierte zusätzlich mit Ultraschall. Man erhielt wässrige Vergleichsformulierung V-WF.1.

### Herstellung von erfindungsgemäßer wässriger Formulierung WF.2:

Man vermischte in einem Rührgefäß 350 g Sol 1, 350 g einer 30 Gew.-% wässrigen Dispersion von (b.2) und 5 g (e.1), füllte mit Wasser auf einen Liter auf. Man verrührte mit einem Schnellrührer (Ultraturrax) und dispergierte zusätzlich mit Ultraschall. Man erhielt erfindungsgemäße wässrige Formulierung WF.2.

### Herstellung von erfindungsgemäßer wässriger Formulierung WF.3:

Man vermischte in einem Rührgefäß 350 g Sol 1, 350 g einer 30 Gew.-% wässrigen Dispersion von (b.3), 100 g (g.1) (tell qu'elle) und 5 g (e.1), füllte mit Wasser auf einen Liter auf. Man verrührte mit einem Schnellrührer (Ultraturrax) und dispergierte zusätzlich mit Ultraschall. Man erhielt erfindungsgemäße wässrige Formulierung WF.3.

### I.1.4 Herstellung von weiteren erfindungsgemäßen wässrigen Formulierungen

Man vermischte in einem Rührgefäß 127,32 ml Sol gemäß Tabelle 2, ggf. Partikel (b) und ggf. 1 ml Base N-Methylimidazol. Man verdünnte mit Wasser auf insgesamt das zehnfache Volumen und verrührte mit einem Schnellrührer (Ultraturrax) und dispergierte zusätzlich mit Ultraschall. Man erhielt erfindungsgemäße wässrige Formulierungen gemäß Tabelle 2.

**Tabelle 2:**

| Zusammensetzungen von erfindungsgemäßen wässrigen Formulierungen | | | |
|---|---|---|---|
| Wässrige Formulierung | Sol Nr. | (b.1) [g] | N-Methylimidazol [ml] |
| WF.4 | 2 | - | - |
| WF.5 | 3 | - | 1 |
| WF.6 | 1 | 3 | 1 |
| WF.7 | 1 | 15 | 1 |
| WF.8 | 1 | 30 | 1 |
| WF.9 | 1 | 3 | - |
| WF.10 | 1 | 15 | - |
| WF.11 | 1 | 30 | - |
| WF.12 | 4 | 3 | 1 |
| WF.13 | 4 | 15 | 1 |
| WF.14 | 4 | 30 | 1 |
| WF.15 | 4 | 3 | - |
| WF.16 | 4 | 15 | - |
| WF.17 | 4 | 30 | - |
| WF.18 | 5 | 3 | 1 |
| WF.19 | 5 | 15 | 1 |
| WF.20 | 5 | 30 | 1 |
| WF.21 | 5 | 3 | - |
| WF.22 | 5 | 15 | - |
| WF.23 | 5 | 30 | - |
| WF.24 | 5 | - | 1 |

### II. Herstellung von erfindungsgemäßem Textil

Es wurden folgende Tests durchgeführt:
Scheuerprüfung nach Martindale in Anlehnung an die DIN Norm 53863-2. Dazu wurde aus dem zu prüfendem Textil eine Probe mit einem Durchmesser von 38 mm ausgestanzt und auf der linken Warenseite beschriftet und getestet.

Die Höchstzugkraft (HZK) beschreibt die Kraft, die nötig ist, einen Gewebestreifen mit einer definierten Probengröße zu zerstören (entweder durch Faden- oder Gewebebruch). Durchgeführt wurden die Prüfungen an dem Zwick Universalprüfgerät. Dazu wurden aus jedem erfindungsgemäßen Textil zwei Proben mit der Größe 200 mm x 50 mm fadengerade ausgestanzt. Zur Prüfung wurde dann je eine dem Normklima angeglichene Probe in die Klemmen des Prüfgerätes eingespannt und mit einer Geschwindigkeit von 10 cm/min auseinander gezogen. Das Prüfgerät stoppte die Prüfung, sobald ein Faden- oder Gewebebruch vorlag. Man ermittelte Kraftwerte in [N] bzw. [daN] für die Höchstzugkraft und in % für die Höchstzugdehnung.

Die Höchstzugdehnung (HZD) beschreibt die Längenänderung einer Textilprobe mit einer definierten Probengröße im Vergleich zu der Ausgangslänge.

### II.1 Herstellung von erfindungsgemäßem Textil PES.2 und PES.3 sowie Vergleichstextil V-PES.1

Als Textil PES-a wurde jeweils Polyestergewebe mit 100 % PES verwendet, Filamentgarn, Flächengewicht 280 g/m², Kettfadendichte 25 Fd/cm, Schussfadendichte 17 Fd/cm

In einem Horizontalzwickelfoulard der Firma Mathis wurde PES-a bei einem Walzendruck von 3 bar und einem Vorzug von 1 m/min mit erfindungsgemäßer wässriger Formulierung foulardiert. Die Trocknung erfolgte nach der Ausrüstung auf einem Labortrockner der Fa. Mathis über 10 Minuten bei 100°C. Danach fixierte man über 5 Minuten bei 160°C. Man erhielt erfindungsgemäßes Textil PES.2 und PES.3 sowie Vergleichstextil V-PES.1. Die anwendungstechnischen Tests sind in Tabelle 3 zusammengefasst.

**Tabelle 3.**

| Textilien PES.1 bis PES.3 | | | | | |
|---|---|---|---|---|---|
| Textil Nr. | Wässrige Formulierung | Flottenaufnahme nass [%] | HZK [N] | HZD [%] | Martindale [Note] |
| V-PES.1 | V-WF.1 | 65 | 1321 | 25,39 | 1 |
| PES.2 | WF.2 | 82 | 1403 | 31,23 | 3,5 |
| PES.3 | WF.3 | 82 | 1593 | 41,82 | 3 |

### 11.2 Herstellung von erfindungsgemäßem Textil PES.6, PES.12 und PES.18

Als Textil PES-b wurde jeweils Polyestergewebe mit 100 % PES verwendet, Filamentgarn, Flächengewicht 234 g/m², Kettfadendichte 24 Fd/cm, Schussfadendichte 20 Fd/cm

In einem Horizontalzwickelfoulard der Firma Mathis wurde PES-b bei einem Walzendruck von 3 bar und einem Vorzug von 1 m/min mit erfindungsgemäßer wässriger Formulierung foulardiert. Die Trocknung erfolgte nach der Ausrüstung auf einem Labortrockner der Fa. Mathis über 10 Minuten bei 100°C. Danach fixierte man über 3 Minuten bei 180°C. Man erhielt erfindungsgemäßes Textil PES.6, PES.12 und PES.18.

Tabelle 4 enthält Messwerte zu ausgewählten erfindungsgemäßen Textilien.

**Tabelle 4.**

| Erfindungsgemäße Textilien PES.6, PES.12 und PES.18 | | | | |
|---|---|---|---|---|
| Textil Nr. | Wässrige Formulierung | Flottenaufnahme trocken [%] | HZK [N] | HZD [%] |
| PES.6 | WF.6 | 10,1 | 606 | 43,2 |
| PES.12 | WF.12 | 4,9 | 624 | 44,7 |
| PES.18 | WF.18 | 1,6 | 679 | 50,7 |

## Patentansprüche

1. Verfahren zur Behandlung von textilen Substraten, **dadurch gekennzeichnet, dass** man mit einer wässrigen Formulierung behandelt, enthaltend
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten,
und die zumindest 50 Gew.-% Wasser enthält,
und wobei die wässrige Formulierung frei ist von organischen Fluorverbindungen.

2. Verfahren nach Anspruch 1, **dadurch gekennzeichnet, dass** die wässrige Formulierung weiterhin mindestens ein anorganisches Oxid (b) in partikulärer Form enthält, wobei die Primärpartikel einen Durchmesser im Bereich von 5 bis 150 nm aufweisen.

3. Verfahren nach Anspruch 1 oder 2, **dadurch gekennzeichnet, dass** man zur Herstellung von wässriger Formulierung
(c) mindestens eine Säure
einsetzt.

4. Verfahren nach einem der Ansprüche 1 bis 3, **dadurch gekennzeichnet, dass** mindestens eine Gruppe X¹ gewählt wird aus A¹-Glycidyl, und wobei A¹ gewählt ist aus (CH₂)_{y}, wobei ein bis drei nicht-benachbarte CH₂-Gruppen durch je ein Sauerstoffatom ersetzt sein können,
und y gewählt ist aus ganzen Zahlen im Bereich von eins bis zehn.

5. Verfahren nach einem der Ansprüche 1 bis 4, dass man nach der Behandlung mit wässriger Formulierung thermisch behandelt.

6. Verfahren nach einem der Ansprüche 1 bis 5, **dadurch gekennzeichnet, dass** die wässrige Formulierung weiterhin Hydrolyseprodukte von mindestens einer Siliziumverbindung (d) der allgemeinen Formel (X¹)ₙSi(R¹)₄₋ₙ enthält, wobei die Variablen wie folgt definiert sind:
n ist eine Zahl im Bereich von 2 bis 3,
R¹ gleich oder verschieden und gewählt aus C₁-C₁₀-Alkyl, C₆-C₁₄-Aryl, C₃-C₁₀-Cycyloalkyl, C₂-C₁₀-Alkenyl, A¹-OH, A¹-NH₂, A¹-NHR², A¹-N(R²)₂, Silyl, Disilyl und Trisilyl,
R² gleich oder verschieden und gewählt aus C₁-C₄-Alkyl, Benzyl und Phenyl, wobei zwei Reste R² auch gemeinsam unter Bildung eines Ringes C₄-C₁₀-Alkylen sein können.

7. Textile Substrate, hergestellt nach einem Verfahren nach einem der Ansprüche 1 bis 7.

8. Verwendung von textilen Substraten nach Anspruch 7 zur Herstellung von technischen Textilien.

9. Verwendung nach Anspruch 8, **dadurch gekennzeichnet, dass** technische Textilien gewählt werden aus Textilien für Autositze, Markisen oder Förderbänder.

10. Technische Textilien, umfassend oder bestehend aus einem textilen Substrat nach einem der Ansprüche 7.

11. Autositze, Markisen oder Förderbänder, umfassend ein textiles Substrat nach einem der Ansprüche 7.

12. Wässrige Formulierung mit einem Wassergehalt von mindestens 50 Gew.-%, enthaltend
(a) Hydrolyseprodukte von mindestens einer Siliziumverbindung mit mindestens 4 hydrolysierbaren Gruppen X¹ pro Molekül, wobei X¹ gleich oder verschieden sind und gewählt aus C₁-C₁₀-Alkoxy, C₁-C₄-Carbonsäureresten und Epoxidgruppenhaltigen Resten,
**dadurch gekennzeichnet, dass** sie frei ist von organischen Fluorverbindungen.

13. Wässrige Formulierung nach Anspruch 12, **dadurch gekennzeichnet, dass** sie einen pH-Wert im Bereich von 6 bis 9 aufweist.

14. Wässrige Formulierung nach Anspruch 12 oder 13, **dadurch gekennzeichnet, dass** mindestens eine Gruppe X¹ gewählt wird aus A¹-Glycidyl, wobei A¹ gewählt ist aus (CH₂)_{y}, wobei ein bis drei nicht-benachbarte CH₂-Gruppen durch je ein Sauerstoffatom ersetzt sein können,
und y gewählt ist aus ganzen Zahlen im Bereich von eins bis zehn.

15. Wässrige Formulierung nach einem der Ansprüche 12 bis 14, **dadurch gekennzeichnet, dass** sie zusätzlich mindestens einen Weichmacher (f) enthält.

16. Wässrige Formulierung nach einem der Ansprüche 12 bis 15, **dadurch gekennzeichnet, dass** sie mindestens ein anorganisches Oxid (b) in partikulärer Form enthält, wobei die Primärpartikel einen Durchmesser im Bereich von 5 bis 150 nm aufweisen.

17. Verwendung von Formulierungen nach einem der Ansprüche 12 bis 16 zur Behandlung von textilen Substraten.
